# EUROPEAN PATENT APPLICATION

(11) **EP 4 156 842 A1**
(43) Date of publication of application: **29.03.2023**
(21) Application number: 21807801.2
(22) Date of filing: 19.05.2021
(51) Int. Cl.: H04W 76/10

(54) **METHOD AND APPARATUS FOR TRANSFERRING KEY SERVICE BEARER, AND ELECTRONIC DEVICE AND STORAGE MEDIUM**

(30) Priority: 19.05.2020 CN 202010427205
(71) Applicant: ZTE Corporation, Shenzhen, Guangdong 518057 (CN)
(72) Inventor: SUN, Shanshan, Shenzhen, Guangdong 518057 (CN)
(74) Representative: Aipex B.V.
(86) International application number: PCT/CN2021/094604
(87) International publication number: WO 2021/233335

(57) **Abstract**

Provided are a method and apparatus for transferring a key service bearer, an electronic device, and a storage medium. The method includes in the case where a packet data unit (PDU) session is established/modified, performing data radio bearer (DRB) mapping at a central unit (CU) side and forming a DRB list according to a first preset bearing policy; and transferring, by the CU side, the mapped DRB list and quality of service (QoS) flow information to a distributed unit (DU) side through an F1 interface.

## Description

### TECHNICAL FIELD

The present application relates to the field of mobile communications, for example, a method and apparatus for transferring a key service bearer in a 5G scenario, an electronic device, and a storage medium.

### BACKGROUND

With the development of mobile communication technologies, 5th Generation (5G) has been known be people. In terms of a 5G radio access network (RAN) architecture, a central unit/distributed unit (CU/DU) architecture scheme is approved in the 3rd Generation Partnership Project (3GPP). The CU mainly handles a non-real-time wireless higher layer protocol stack function, while the DU mainly handles a physical layer function. The CU and the DU complete signaling and data transmission through an F 1 interface.

As specified in the protocol, within a lifetime of each packet data unit (PDU) session, at least one quality of service flow (QoS flow) is used as a default QoS flow, and the QoS flow must be of a non-Guaranteed Bit Rate (non-GBR) type. If no such QoS flow exists, the PDU session should not be established/modified successfully. In addition, a QoS flow carrying an additional QoS flow information cell exists, which indicates that the QoS flow occurs more frequently than other QoS flow services in the PDU session. Only the QoS flow of the non-GBR type carries the additional QoS flow information cell.

The service of the non-GBR type and the service carrying the additional QoS flow information cell are referred to as key services. A base station side should ensure the successful admission of such key services as far as possible. In the case of limited cell resources, if the establishment/admission of such key services fails, it may lead to the admission failure of the PDU session, which may affect the continuity of the key services and the user experience.

### SUMMARY

The present application provides a method and apparatus for transferring a key service bearer in a 5G scenario, an electronic device, and a storage medium so that in the case where the number of DRBs admitted by a cell is limited and physical resources of the cell are limited, a key service that occurs more frequently may be admitted preferentially, thereby ensuring the success rate of the key service and the establishment/modification of the PDU session.

According to an aspect of embodiments of the present application, a method for transferring a key service bearer is provided and includes the following.

In the case where a packet data unit (PDU) session is established/modified, data radio bearer (DRB) mapping is performed at a central unit (CU) side and a DRB list is formed according to a first preset bearing policy.

The CU side transfers the mapped DRB list and quality of service flow (QoS flow) information to a distributed unit (DU) side through an F 1 interface.

According to another aspect of the embodiments of the present application, a method for transferring a key service bearer is provided and includes the following.

When a terminal moves and a source side fills in packet data unit (PDU) session information, a data radio bearer (DRB) list is formed according to a second preset bearing policy.

The source side transfers the DRB list to a central unit (CU) at a target side through an XN/NG interface.

According to another aspect of the embodiments of the present application, an apparatus for transferring a key service bearer is provided and includes a first generation module and a first sending module.

The first generation module is configured to, in the case where a packet data unit (PDU) session is established/modified, perform data radio bearer (DRB) mapping at a central unit (CU) side and form a DRB list according to a first preset bearing policy.

The first sending module is configured such that the CU side transfers the mapped DRB list and quality of service flow (QoS flow) information to a distributed unit (DU) side through an F1 interface.

According to another aspect of the embodiments of the present application, an apparatus for transferring a key service bearer is provided and includes a second generation module and a second sending module.

The second generation module is configured to, when a terminal moves and a source side fills in packet data unit (PDU) session information, form a data radio bearer (DRB) list according to a second preset bearing policy.

The second sending module is configured such that the source side transfers the DRB list to a central unit (CU) at a target side through an XN/NG interface.

According to another aspect of the embodiments of the present application, an electronic device is provided and includes a memory, a processor, and a computer program stored in the memory and executable by the processor, where the computer program, when executed by the processor, causes the processor to perform the method for transferring a key service bearer according to the embodiments of the present application.

According to another aspect of the embodiments of the present application, a computer-readable storage medium is provided and configured to store a program of a method for transferring a key service bearer which, when executed by a processor, causes the processor to perform the method for transferring a key service bearer according to the embodiments of the present application.

### BRIEF DESCRIPTION OF DRAWINGS

FIG. 1 is a flowchart of a method for transferring a key service bearer in a 5G scenario according to an embodiment of the present application;
FIG. 2 is a flowchart of another method for transferring a key service bearer in a 5G scenario according to an embodiment of the present application;
FIG. 3 is a structural diagram of an apparatus for transferring a key service bearer in a 5G scenario according to an embodiment of the present application;
FIG. 4 is a structural diagram of another apparatus for transferring a key service bearer in a 5G scenario according to an embodiment of the present application;
FIG. 5 is a flowchart of another method for transferring a key service bearer in a 5G scenario according to an embodiment of the present application;
FIG. 6 is a flowchart of another method for transferring a key service bearer in a 5G scenario according to an embodiment of the present application;
FIG. 7 is a flowchart of another method for transferring a key service bearer in a 5G scenario according to an embodiment of the present application; and
FIG. 8 is a structural diagram of an electronic device according to an embodiment of the present application.

### DETAILED DESCRIPTION

The present application is described below in detail in conjunction with drawings and embodiments.

Suffixes such as "module", "part" or "unit" used to indicate elements in the subsequent description are merely used to facilitate the description of the present application and have no particular meaning in themselves. Therefore, "module", "part" or "unit" may be used in a mixed manner.

It is to be noted that the terms "first", "second" and the like in the description, claims and drawings of the present application are used to distinguish between similar objects and are not necessarily used to describe a particular order or sequence.

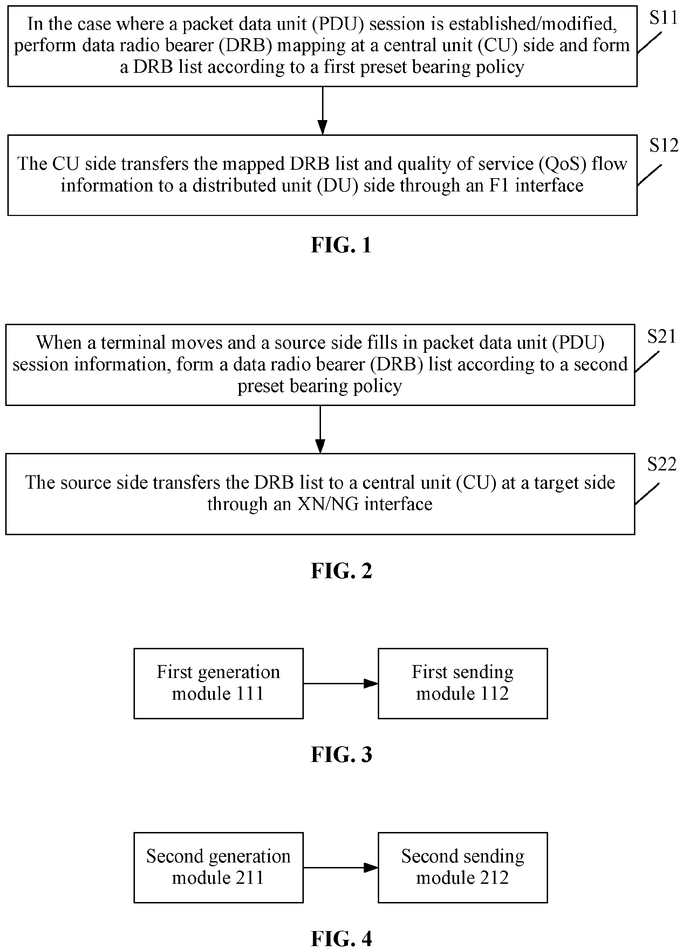

In an embodiment, as shown in FIG. 1, the present application provides a method for transferring a key service bearer in a 5G scenario. The method includes S 1 1 and S 12.

In S11, in the case where a packet data unit (PDU) session is established/modified, data radio bearer (DRB) mapping is performed at a central unit (CU) side and a DRB list is formed according to a first preset bearing policy.

In S12, the CU side transfers the mapped DRB list and quality of service flow (QoS flow) information to a distributed unit (DU) side through an F 1 interface.

In this embodiment, in the case where the PDU session is established/modified at a base station side, the DRB mapping is performed at the CU side, and the DRB list is formed according to the first preset bearing policy so that when the DU side admits a DRB, in the case where a number of DRBs admitted by a cell is limited and physical resources of the cell are limited, a key service of a non-Guaranteed Bit Rate (non-GBR) type or a key service that occurs more frequently is preferentially admitted, thereby ensuring the success rate of the key service and the establishment/modification of the PDU session.

In an embodiment, in S11, that the DRB mapping is performed at the CU side and the DRB list is formed according to the first preset bearing policy includes the following.

A DRB containing a key service is identified.

The DRB containing the key service is born according to the first preset bearing policy, so as to form the DRB list.

In an embodiment, the first preset bearing policy includes placing the DRB containing the key service at a top of the DRB list.

In S11, that the DRB containing the key service is born according to the first preset bearing policy, so as to form the DRB list includes placing, by the CU side, the DRB containing the key service at the top of the DRB list to form the DRB list.

In this embodiment, in the case where the PDU session is established/modified at the base station side, the DRB mapping is performed at the CU side, and the CU side places the DRB containing the key service at the top of the DRB list, so as to form the DRB list so that when the DU side admits the DRB, in the case where the number of DRBs admitted by the cell is limited and the physical resources of the cell are limited, a key service of the non-GBR type or a key service that occurs more frequently is preferentially admitted, thereby ensuring the success rate of the key service and the establishment/modification of the PDU session.

In an embodiment, the method further includes admitting, by the DU side, the DRB in an order of the DRB list transferred by the CU side.

In this embodiment, when the DU side admits the DRB, a key service that occurs more frequently is preferentially admitted, and the success rate of the key service and the establishment/modification of the PDU session can be ensured in the case where the number of DRBs admitted by the cell is limited and the physical resources of the cell are limited.

In an embodiment, the first preset bearing policy includes filling in, by the CU side, the DRB containing the key service in an additional QoS flow information field; where the additional QoS flow information field is added in a DRBs-ToBeSetup-Item cell of an F1 protocol.

In S11, that the DRB containing the key service is born according to the first preset bearing policy, so as to form the DRB list includes the following.

The CU side places the DRB containing the key service and carrying the additional QoS flow information field in the DRB list, so as to form the DRB list.

In this embodiment, in the case where the PDU session is established/modified at the base station side, the DRB mapping is performed at the CU side, and the CU side places the DRB containing the key service and carrying the additional QoS flow information field in the DRB list, so as to form the DRB list so that when the DU side admits the DRB, in the case where the number of DRBs admitted by the cell is limited and the physical resources of the cell are limited, the DU side preferentially admits the DRB carrying the additional QoS flow information, thereby ensuring the success rate of the key service and the establishment/modification of the PDU session.

In an embodiment, the method further includes preferentially admitting, by the DU side, the DRB carrying additional QoS flow information.

In this embodiment, when the DU side admits the DRB, the DU side preferentially admits the DRB carrying the additional QoS flow information, and the success rate of the key service and the establishment/modification of the PDU session can be ensured in the case where the number of DRBs admitted by the cell is limited and the physical resources of the cell are limited.

In an embodiment, as shown in FIG. 2, the present application provides another method for transferring a key service bearer in a 5G scenario. The method includes S21 and S22.

In S21, when a terminal moves and a source side fills in packet data unit (PDU) session information, a data radio bearer (DRB) list is formed according to a second preset bearing policy.

In S22, the source side transfers the DRB list to a central unit (CU) at a target side through an XN/NG interface.

In this embodiment, when the terminal moves and the source side fills in the PDU session information, the DRB list is formed according to the second preset bearing policy so that the CU side admits the PDU session at the source side directly in sequence, thereby ensuring the preferential establishment of the key service. In the case where the number of DRBs admitted by the cell is limited and the physical resources of the cell are limited, a key service of the non-GBR type or a key service that occurs more frequently is preferentially admitted, thereby ensuring the continuity of the key service and improving the success rate of handover.

In an embodiment, in S21, that when the source side fills in the PDU session information, the DRB list is formed according to the second preset bearing policy includes the following.

A DRB containing a key service is identified.

The DRB containing the key service is born according to the second preset bearing policy, so as to form the DRB list.

In an embodiment, the second preset bearing policy includes placing the DRB containing the key service at a top of the DRB list.

In S21, that the DRB containing the key service is born according to the second preset bearing policy, so as to form the DRB list includes when the source side fills in the PDU session information, placing the DRB containing the key service at the top of the DRB list to form the DRB list.

In this embodiment, when the terminal moves and the source side fills in the PDU session information, the DRB containing the key service is placed at the top of the DRB list, so as to form the DRB list so that the CU side admits the PDU session at the source side directly according to the order of the DRB list, thereby ensuring the preferential establishment of the key service. In the case where the number of DRBs admitted by the cell is limited and the physical resources of the cell are limited, a key service of the non-GBR type or a key service that occurs more frequently is preferentially admitted, thereby ensuring the continuity of the key service and improving the success rate of handover.

In an embodiment, the method further includes admitting, by the CU at the target side, a DRB in an order of the source side transferring the DRB list.

In this embodiment, when the terminal moves, the CU side admits the PDU session at the source side directly in the order of the DRB list, thereby ensuring the preferential establishment of the key service. In the case where the number of DRBs admitted by the cell is limited and the physical resources of the cell are limited, a key service of the non-GBR type or a key service that occurs more frequently is preferentially admitted, thereby ensuring the continuity of the key service and improving the success rate of handover.

In an embodiment, as shown in FIG. 3, the present application provides an apparatus for transferring a key service bearer in a 5G scenario. The apparatus includes a first generation module 111 and a first sending module 112.

The first generation module 111 is configured to, in the case where a packet data unit (PDU) session is established/modified, perform data radio bearer (DRB) mapping at a central unit (CU) side and form a DRB list according to a first preset bearing policy.

The first sending module 112 is configured such that the CU side transfers the mapped DRB list and quality of service flow (QoS flow) information to a distributed unit (DU) side through an F1 interface.

In this embodiment, in the case where the PDU session is established/modified at a base station side, the DRB mapping is performed at the CU side, and the DRB list is formed according to the first preset bearing policy so that when the DU side admits a DRB, in the case where a number of DRBs admitted by a cell is limited and physical resources of the cell are limited, a non-Guaranteed Bit Rate (non-GBR) type or a key service that occurs more frequently is preferentially admitted, thereby ensuring the success rate of the key service and the establishment/modification of the PDU session.

In an embodiment, the first generation module 111 is configured to perform the following.

A DRB containing a key service is identified.

The DRB containing the key service is born according to the first preset bearing policy, so as to form the DRB list.

In an embodiment, the first preset bearing policy includes placing the DRB containing the key service at a top of the DRB list. The first generation module 111 is configured to place the DRB containing the key service at the top of the DRB list to form the DRB list.

In this embodiment, in the case where the PDU session is established/modified at the base station side, the DRB mapping is performed at the CU side, and the CU side places the DRB containing the key service at the top of the DRB list, so as to form the DRB list so that when the DU side admits the DRB, in the case where the number of DRBs admitted by the cell is limited and the physical resources of the cell are limited, a key service of the non-GBR type or a key service that occurs more frequently is preferentially admitted, thereby ensuring the success rate of the key service and the establishment/modification of the PDU session.

In an embodiment, the first preset bearing policy includes filling in, by the CU side, the DRB containing the key service in an additional QoS flow information field; where the additional QoS flow information field is added in a DRBs-ToBeSetup-Item cell of an F1 protocol. The first generation module 111 is configured to place the DRB containing the key service and carrying the additional QoS flow information field in the DRB list to form the DRB list.

In this embodiment, in the case where the PDU session is established/modified at the base station side, the DRB mapping is performed at the CU side, and the CU side places the DRB containing the key service and carrying the additional QoS flow information field in the DRB list, so as to form the DRB list so that when the DU side admits the DRB, the DU side preferentially admits the DRB carrying the additional QoS flow information, and the success rate of the key service and the establishment/modification of the PDU session can be ensured in the case where the number of DRBs admitted by the cell is limited and the physical resources of the cell are limited.

It is to be noted that the device embodiment and the method embodiment belong to the same concept, the implementation process of the device embodiment is described in detail in the method embodiment, and the technical features in the method embodiment are correspondingly applicable in the device embodiment and are not repeated here.

In an embodiment, as shown in FIG. 4, the present application provides another apparatus for transferring a key service bearer in a 5G scenario. The apparatus includes a second generation module 211 and a second sending module 212.

The second generation module 211 is configured to, when a terminal moves and a source side fills in packet data unit (PDU) session information, form a data radio bearer (DRB) list according to a second preset bearing policy.

The second sending module 212 is configured such that the source side transfers the DRB list to a central unit (CU) at a target side through an XN/NG interface.

In this embodiment, when the terminal moves and the source side fills in the PDU session information, the DRB list is formed according to the second preset bearing policy so that when the CU side admits the PDU session at the source side directly in sequence, thereby ensuring the preferential establishment of the key service. In the case where the number of DRBs admitted by the cell is limited and the physical resources of the cell are limited, a key service of the non-GBR type or a key service that occurs more frequently is preferentially admitted, thereby ensuring the continuity of the key service and improving the success rate of handover.

In an embodiment, the second generation module 211 is configured to perform the following.

A DRB containing a key service is identified.

The DRB containing the key service is born according to the second preset bearing policy, so as to form the DRB list.

In an embodiment, the second preset bearing policy includes placing the DRB containing the key service at a top of the DRB list. The second generation module 211 is configured to, when the source side fills in the PDU session information, place the DRB containing the key service at the top of the DRB list to form the DRB list.

In this embodiment, when the terminal moves and the source side fills in the PDU session information, the DRB containing the key service is placed at the top of the DRB list, so as to form the DRB list so that when the CU side admits the PDU session at the source side directly according to the order of the DRB list, thereby ensuring the preferential establishment of the key service. In the case where the number of DRBs admitted by the cell is limited and the physical resources of the cell are limited, a key service of the non-GBR type or a key service that occurs more frequently is preferentially admitted, thereby ensuring the continuity of the key service and improving the success rate of handover.

It is to be noted that the device embodiment and the method embodiment belong to the same concept, the implementation process of the device embodiment is described in detail in the method embodiment, and the technical features in the method embodiment are correspondingly applicable in the device embodiment and are not repeated here.

The technical solutions of the present application are described below in conjunction with embodiments and drawings.

### Embodiment one

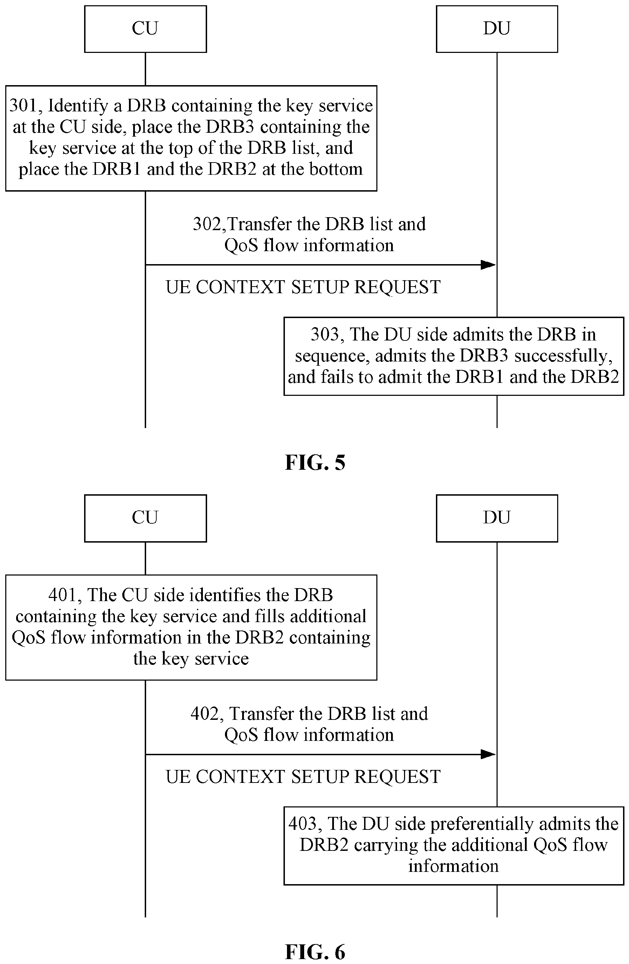

In this embodiment, as shown in FIG. 5, a terminal needs to newly create a PDU session, a DRB 1 of a Guaranteed Bit Rate (GBR) type, a DRB2 of the GBR type, and a DRB3 of the non-GBR type, where the DRB3 is a key service. Remaining resources of a cell at the DU side can admit only one more DRB.

A method for transferring a key service bearer in a 5G scenario includes the following.

In S301, when the PDU session is established/modified, DRB mapping is performed at the CU side, a DRB containing the key service is identified, the DRB3 containing the key service is placed at the top of the DRB list, and the DRB 1 and the DRB2 are placed at the bottom, so as to form the DRB list.

In S302, the CU side transfers the mapped DRB list and QoS flow information to a DU side through an F 1 interface.

In S303, the DU side admits the DRB in sequence, only the DRB3 is admitted successfully, and the DRB 1 and the DRB2 fail to be admitted, but the PDU session is established successfully, and the establishment of the key service is guaranteed.

In this embodiment, in the case where the PDU session is established/modified at the base station side, the DRB mapping is performed at the CU side, and the CU side places the DRB containing the key service at the top of the DRB list, so as to form the DRB list so that when the DU side admits the DRB, in the case where the number of DRBs admitted by the cell is limited and the physical resources of the cell are limited, a key service of the non-GBR type or a key service that occurs more frequently is preferentially admitted, thereby ensuring the success rate of the key service and the establishment/modification of the PDU session.

### Embodiment two

In this embodiment, as shown in FIG. 6, a terminal needs to newly create a PDU session, including a DRB1 of the GBR type and a DRB2 of the non-GBR type with an additional QoS flow information cell. The DRB2 is a key service. Remaining resources of a cell at the DU side can admit only one more DRB.

A method for transferring a key service bearer in a 5G scenario includes the following.

In S401, when the PDU session is established/modified, an additional QoS flow information cell is filled in when a DRBs-ToBeSetup-Item of the DRB2 is filled in, so as to form the DRB list.

In S402, the CU side transfers the mapped DRB list and QoS flow information to a DU side through an F1 interface.

In S403, the DU side preferentially admits the DRB2, only the DRB2 is admitted successfully, and the DRB 1 fails to be admitted, but the PDU session is established successfully, and the establishment of the key service is guaranteed.

In this embodiment, in the case where the PDU session is established/modified at the base station side, the DRB mapping is performed at the CU side, and the CU side places the DRB containing the key service and carrying the additional QoS flow information field in the DRB list, so as to form the DRB list so that when the DU side admits the DRB, the DU side preferentially admits the DRB carrying the additional QoS flow information, and in the case where the number of DRBs admitted by the cell is limited and the physical resources of the cell are limited, a key service of the non-GBR type or a key service that occurs more frequently is preferentially admitted, thereby ensuring the success rate of the key service and the establishment/modification of the PDU session.

### Embodiment three

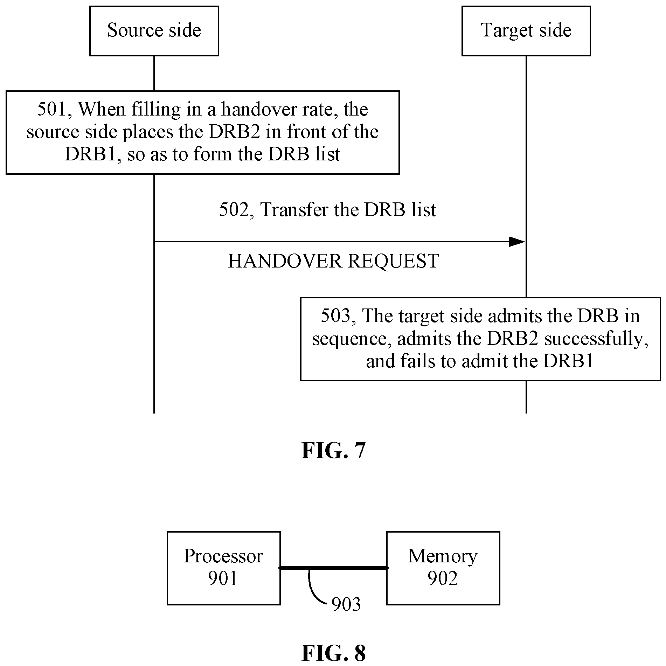

In this embodiment, as shown in FIG. 7, a terminal moves and carries a PDU session. The PDU session carries a DRB 1 of the GBR type and a DRB2 of the non-GBR type. Remaining resources of a CU cell at a target side can admit only one more DRB.

A method for transferring a key service bearer in a 5G scenario includes the following.

In S501, when filling in a handover rate, the source side places the DRB2 in front of the DRB1, so as to form the DRB list.

In S502, the source side transfers the DRB list to a CU at a target side through an XN/NG interface.

In S503, the target side performs admitting in sequence, the DRB2 is admitted successfully, the DRB 1 fails to be admitted, and the PDU session is admitted successfully, thereby ensuring the establishment of the key service.

In this embodiment, when the terminal moves and the source side fills in the PDU session information, the DRB containing the key service is placed at the top of the DRB list, so as to form the DRB list so that when the CU side admits the PDU session at the source side directly according to the order of the DRB list, thereby ensuring the preferential establishment of the key service. In the case where the number of DRBs admitted by the cell is limited and the physical resources of the cell are limited, a key service of the non-GBR type or a key service that occurs more frequently is preferentially admitted, thereby ensuring the continuity of the key service and improving the success rate of handover.

Furthermore, an embodiment of the present application further provides an electronic device. As shown in FIG. 8, the electronic device 900 includes a memory 902, a processor 901, and at least one computer program stored in the memory 902 and executable by the processor 901, where the memory 902 and the processor 901 are coupled together through a bus system 903, and the at least one computer program, when executed by the processor 901, causes the processor 901 to perform the following steps of the method for transferring a key service bearer in a 5G scenario provided by the embodiments of the present application.

In S11, in the case where a packet data unit (PDU) session is established/modified, data radio bearer (DRB) mapping is performed at a central unit (CU) side and a DRB list is formed according to a first preset bearing policy.

In S12, the CU side transfers the mapped DRB list and quality of service flow (QoS flow) information to a distributed unit (DU) side through an F1 interface.

Alternatively, in S21, when a terminal moves and a source side fills in packet data unit (PDU) session information, a data radio bearer (DRB) list is formed according to a second preset bearing policy.

In S22, the source side transfers the DRB list to a central unit (CU) at a target side through an XN/NG interface.

The methods disclosed in the embodiments of the present application may be applied to the processor 901 or may be performed by the processor 901. The processor 901 may be an integrated circuit chip having signal processing capabilities. In the implementation process, the steps of the preceding methods may be performed by an integrated logic circuit of hardware or a software instruction in the processor 901. The processor 901 may be a general-purpose processor, a digital signal processor (DSP), or other programmable logic device, a discrete gate or a transistor logic device, or a discrete hardware component. The processor 901 may implement or execute the methods, steps, and logic block diagrams disclosed in the embodiments of the present application. The general-purpose processor may be a microprocessor or any conventional processor. The steps of the methods disclosed in the embodiments of the present application may be directly implemented by a hardware decoding processor or may be implemented by a combination of hardware and software modules in the decoding processor. The software module may be located in a storage medium which is located in the memory 902. The processor 901 reads information in the memory 902 and performs the steps of the preceding methods in conjunction with hardware of the processor 901.

It is to be understood that the memory 902 in the embodiments of the present application may be a volatile memory or a non-volatile memory or may include both the volatile memory and the non-volatile memory. The non-volatile memory may be a read-only memory (ROM), a programmable read-only memory (PROM), an erasable programmable read-only memory (EPROM), an electrically erasable programmable read-only memory (EEPROM), a ferromagnetic random-access memory (FRAM), a flash memory or other memory technologies, a compact disc read-only memory (CD-ROM), a digital video disc (DVD) or other optical storages, a magnetic cassette, a magnetic tape, a magnetic disk or other magnetic storage devices. The volatile memory may be a random-access memory (RAM). By way of an exemplary description rather than a limited description, many forms of RAMs may be used, such as a static random-access memory (SRAM), a synchronous static random-access memory (SSRAM), a dynamic random-access memory (DRAM), a synchronous dynamic random-access memory (SDRAM), a double data rate synchronous dynamic random-access memory (DDRSDRAM), an enhanced synchronous dynamic random-access memory (ESDRAM), a SyncLink dynamic random-access memory (SLDRAM) and a direct Rambus random-access memory (DRRAM). The memory described in the embodiments of the present application is intended to include, but is not limited to, these and any other suitable type of memory.

It is to be noted that the electronic device embodiment and the method embodiment belong to the same concept, the implementation process of the electronic device embodiment is described in detail in the method embodiment, and the technical features in the method embodiment are correspondingly applicable in the electronic device embodiment and are not repeated here.

In addition, in an example embodiment, an embodiment of the present application further provides a computer storage medium, for example, a computer-readable storage medium, for example, including the memory 902 configured to store a computer program. The computer storage medium is configured to store at least one program of a method for transferring a key service bearer in a 5G scenario which, when executed by the processor 901, causes the processor 901 to perform the following steps of the method for transferring a key service bearer in a 5G scenario provided by the embodiments of the present application.

In S11, in the case where a packet data unit (PDU) session is established/modified, data radio bearer (DRB) mapping is performed at a central unit (CU) side and a DRB list is formed according to a first preset bearing policy.

In S12, the CU side transfers the mapped DRB list and quality of service flow (QoS flow) information to a distributed unit (DU) side through an F1 interface.

Alternatively, in S21, when a terminal moves and a source side fills in packet data unit (PDU) session information, a data radio bearer (DRB) list is formed according to a second preset bearing policy.

In S22, the source side transfers the DRB list to a central unit (CU) at a target side through an XN/NG interface.

It is to be noted that a program embodiment of the method for transferring a key service bearer in a 5G scenario on the computer-readable storage medium belongs to the same concept as the method embodiment, the implementation process of the program embodiment is described in detail in the method embodiment, and the technical features in the method embodiment are correspondingly applicable in the embodiment of the computer-readable storage medium and are not repeated here.

It is to be noted that as used herein, the term "include", "contain" or any other variant thereof is intended to encompass a non-exclusive inclusion so that a process, method, article or apparatus that includes a series of elements not only includes these elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

The serial numbers of the embodiments of the present application are for description only and not for the superiority or inferiority of the embodiments.

From the description of the embodiments described above, it will be apparent to those skilled in the art that the method of any embodiment described above may be implemented by means of software plus a necessary general-purpose hardware platform or may of course be implemented by hardware. Based on such understanding, the technical solution provided in the present application substantially, or the part contributing to the related art, may be embodied in the form of a software product. The computer software product is stored on a storage medium (such as a ROM/RAM, a magnetic disk or an optical disk) and includes several instructions for enabling a terminal (which may be a mobile phone, a computer, a server, an air conditioner, or a network device) to perform the method according to each embodiment of the present application.

## Claims

1. A method for transferring a key service bearer, comprising:
in a case where a packet data unit, PDU, session is established/modified, performing data radio bearer, DRB, mapping at a central unit, CU, side and forming a DRB list according to a first preset bearing policy; and
transferring, by the CU side, the mapped DRB list and quality of service, QoS, flow information to a distributed unit, DU, side through an F1 interface.

2. The method of claim 1, wherein performing the DRB mapping at the CU side and forming the DRB list according to the first preset bearing policy comprises:
identifying a DRB containing a key service; and
bearing the DRB containing the key service according to the first preset bearing policy to form the DRB list.

3. The method of claim 2, wherein the first preset bearing policy comprises placing the DRB containing the key service at a top of the DRB list;
wherein bearing the DRB containing the key service according to the first preset bearing policy to form the DRB list comprises placing, by the CU side, the DRB containing the key service at the top of the DRB list to form the DRB list.

4. The method of any one of claims 1 to 3, further comprising admitting, by the DU side, a DRB in an order of the DRB list transferred by the CU side.

5. The method of claim 2, wherein the first preset bearing policy comprises filling in, by the CU side, the DRB containing the key service in an additional QoS flow information field, wherein the additional QoS flow information field is added in a DRBs-ToBeSetup-Item cell of an F1 protocol;
wherein bearing the DRB containing the key service according to the first preset bearing policy to form the DRB list comprises:
placing, by the CU side, the DRB containing the key service and carrying the additional QoS flow information field in the DRB list to form the DRB list.

6. The method of claim 5, further comprising preferentially admitting, by the DU side, the DRB carrying additional QoS flow information.

7. A method for transferring a key service bearer, comprising:
when a terminal moves and a source side fills in packet data unit, PDU, session information, forming a data radio bearer, DRB, list according to a second preset bearing policy; and
transferring, by the source side, the DRB list to a central unit, CU, at a target side through an XN/NG interface.

8. The method of claim 7, wherein when the source side fills in the PDU session information, forming the DRB list according to the second preset bearing policy comprises:
identifying a DRB containing a key service; and
bearing the DRB containing the key service according to the second preset bearing policy to form the DRB list.

9. The method of claim 8, wherein the second preset bearing policy comprises placing the DRB containing the key service at a top of the DRB list;
wherein bearing the DRB containing the key service according to the second preset bearing policy to form the DRB list comprises when the source side fills in the PDU session information, placing the DRB containing the key service at the top of the DRB list to form the DRB list.

10. The method of claim 7, further comprising admitting, by the CU at the target side, a DRB in an order of the source side transferring the DRB list.

11. An apparatus for transferring a key service bearer applied to the method for transferring a key service bearer of any one of claims 1 to 6, comprising a first generation module and a first sending module, wherein
the first generation module, which is configured to, in a case where a packet data unit, PDU, session is established/modified, perform data radio bearer, DRB, mapping at a central unit, CU, side and form a DRB list according to a first preset bearing policy; and
the first sending module, which is configured such that the CU side transfers the mapped DRB list and quality of service, QoS, flow information to a distributed unit, DU, side through an F1 interface.

12. An apparatus for transferring a key service bearer applied to the method for transferring a key service bearer of any one of claims 7 to 10, comprising a second generation module and a second sending module, wherein
the second generation module, which is configured to, when a terminal moves and a source side fills in packet data unit, PDU, session information, form a data radio bearer, DRB, list according to a second preset bearing policy; and
the second sending module, which is configured such that the source side transfers the DRB list to a central unit, CU, at a target side through an XN/NG interface.

13. An electronic device, comprising a memory, a processor, and a computer program stored in the memory and executable by the processor, wherein the computer program, when executed by the processor, causes the processor to perform the method for transferring a key service bearer of any one of claims 1 to 10.

14. A storage medium, which is configured to store a program of a method for transferring a key service bearer which, when executed by a processor, causes the processor to perform the method for transferring a key service bearer of any one of claims 1 to 10.
